# EUROPÄISCHE PATENTANMELDUNG

(11) **EP 4 397 644 A2**
(43) Veröffentlichungstag der Anmeldung: **10.07.2024**
(21) Anmeldenummer: 24177110.4
(22) Anmeldetag: 07.12.2018
(51) Int. Cl.: C04B 38/02

(54) **HERSTELLUNG VON SCHAUMMASSEN**

(30) Priorität: 07.12.2017 DE 102017011280
(62) Teilanmeldung aus: 18830146.9
(71) Anmelder: IGP Chemie GmbH, 48249 Dülmen (DE)
(72) Erfinder: GROSSE-PERDEKAMP, Heinz-Jürgen, 48249 Dülmen (DE); TERBECK, Robin, 48653 Coesfeld (DE); KRÖNKE, Thomas Gerhard Willi, verstorben (DE)
(74) Vertreter: König Szynka Tilmann von Renesse Patentanwälte Partnerschaft mbB Düsseldorf

(57) **Zusammenfassung**

Die Erfindung betrifft Schaummassen, insbesondere nicht brennbare Schaummassen, die beispielsweise im Bauwesen eingesetzt werden können. Die Schaummassen können durch eine Kombination aus einer Zusammensetzung A und einer Zusammensetzung B hergestellt werden.

## Beschreibung

Die Erfindung betrifft Schaummassen, insbesondere nicht brennbare Schaummassen, die beispielsweise im Bauwesen eingesetzt werden können. Die Schaummassen können durch eine Kombination aus einer Zusammensetzung A und einer Zusammensetzung B hergestellt werden (2-Komponentensystem).

In einem weiteren Aspekt betrifft die Erfindung ein Verfahren zum Öffnen von Mikrohohlkugeln. Die Mikrohohlkugeln weisen eine Polymerhülle auf und enthalten ein Treibmittel.

Leichtbauplatten sind aus dem Bauwesen bekannt. Häufig werden Polystyrol-Platten eingesetzt, diese sind jedoch leicht entflammbar. Es besteht daher Bedarf an kostengünstigen, aber nicht brennbaren Dämmmaterialien. Als solche bieten sich zum Beispiel Platten aus Mineralwolle (Steinwolle, Glaswolle), Holzwolle oder auch Schaumglasplatten an.

Bekannt sind Schaumglaskörper aus flüssigem Wasserglas, Füllstoffen und Peroxiden. Die Peroxide zerfallen in dem alkalischen Wasserglas zu Sauerstoff und schäumen dadurch das Gemisch auf [US 3095312 A]. Um den Einsatz der reaktiven Peroxide zu vermeiden, wird alternativ ein Verfahren genutzt, in dem ein saurer Härter eingesetzt wird, welcher das Wasserglas härtet und gleichzeitig ein Gas, wie zum Beispiel CO₂, freisetzt. Durch dieses Gas und den Zusatz von Tensiden wird das Gemisch aufgeschäumt. Der Nachteil dieses Verfahren besteht darin, dass die Gas freisetzende Reaktion zu einer Erwärmung von bis zu 100 °C führt [US 3850650 A]. Ein weiteres Verfahren benötigt kein Aufschäummittel in der Wasserglas-Zusammensetzung. Allein durch die schnelle Erwärmung des enthaltenen Wassers und den daraus entstehenden Gasblasen entsteht ein Schaumglas [US 6497945 B1].

Die US 8,822,557 B2 offenbart einen elastischen Schaum aus organischen und anorganischen Teilen. Damit wird ein Mineralschaum mit verbesserten mechanischen Eigenschaften und Wasserresistenz erhalten, welcher ein mineralisches Bindemittel und eine Polymer-Dispersion enthält.

Die DE 101 41 777 A1 offenbart einen unbrennbaren, anorganischen Schaum, welcher feuchtigkeitsbeständig und elastisch ist. Der Schaum basiert auf einer Mischung aus einem Alkalimetallsilikat, einem Alkalimetallaluminat und einem Treibmittel. Das Verfahren zur Herstellung des anorganischen Schaums erfordert eine Wärmezufuhr.

Die DE 32 44 523 A1 offenbart die Herstellung eines Ortschaums aus Wasserglas und einer Härterlösung ohne Wärmezufuhr. Die beiden Bestandteile Wasserglas und Härterlösung befinden sich in zwei Druckbehältern; die Schaumerzeugung erfolgt unter anderem durch ein unter erhöhtem Druck bei 0-50°C flüssiges Treibgas. Der Ortschaum eignet sich zur Herstellung von zum Beispiel Füll- oder Isolationsmaterial im Bauwesen, das nicht brennbar ist. Als Härter kann auch ein Carbonsäure-Ester eingesetzt werden. Die Schaumstoffe sind nach Erhärten in die Baustoffklasse A 2 einzuordnen (DIN 4102).

Aufgabe der vorliegenden Erfindung ist es, Schaummassen bereitzustellen, die zumindest einen Nachteil des Stands der Technik überwinden. Insbesondere soll ein System zur Bereitstellung eines Ortschaums zur Verfügung gestellt werden, d.h. eines Schaums, der ohne äußere Zufuhr von Wärme entsteht. Die unter Verwendung der Schaummassen herstellbaren Baumaterialien (insbesondere Leichtbauplatten) sollen möglichst brandfest sein und/oder eine gute Biegefestigkeit aufweisen. Besonders vorteilhaft ist zudem eine gute Wärmeisolierung.

In einem weiteren Aspekt der Erfindung soll ein verbessertes Verfahren zum Öffnen von Mikrohohlkugeln zur Verfügung gestellt werden. Dieses Verfahren soll vor allem der Verschäumung von Schaummassen dienen.

Die Aufgabe der Erfindung wird durch die erfindungsgemäße Kombination nach Anspruch 1 gelöst, welche eine Zusammensetzung A (auch "Hauptkomponente") und eine Zusammensetzung B (auch "Initiator") umfasst. Nach dem Zusammenbringen (z.B. Verrühren) von Zusammensetzung A mit Zusammensetzung B schäumt die Mischung auf und härtet anschließend aus. Die Aufschäumzeit kann über die Konzentrationsverhältnisse der Komponenten variiert werden. Die Schaummasse steht dann der Herstellung von Baumaterialien, insbesondere Bauschäumen oder Bauplatten, zur Verfügung.

Ein besonderer Vorteil der Erfindung liegt darin, dass das Verschäumen auch ohne äußere Wärmezufuhr erfolgen kann. Die Kombination kann demnach "kaltverschäumt" werden. Die Verschäumung kann vorzugsweise bei Temperaturen von unter 50°C, weiter bevorzugt von unter 40°C oder sogar von unter 30°C stattfinden, insbesondere bevorzugt bei Raumtemperatur. Damit kann die Verschäumung vor Ort auf einer Baustelle erfolgen. Somit stellt die Erfindung insbesondere ein 2-Komponentensystem zur Herstellung eines Ortschaums zur Verfügung.

### Zusammensetzung A (Hauptkomponente)

Die Zusammensetzung A umfasst Mikrohohlkugeln. In einer besonderen Ausführungsform umfasst die Zusammensetzung A ein anorganisches und/oder organisches Bindemittel und Mikrohohlkugeln. Zudem können mindestens ein Füllstoff (bevorzugt anorganische Mineralien), mindestens eine Faser, Wasser, eine Base (z.B. Natriumhydroxid oder Kaliumhydroxid) und/oder mindestens ein Entschäumer enthalten sein. Die Füllstoffe dienen dazu, dass das fertige Endprodukt nach der Trocknung möglichst wenig Schwund erfährt und/oder Risse bildet. Sie können außerdem die mechanischen Eigenschaften des Produkts verbessern.

Füllstoff, Faser, Wasser, Base und/oder Entschäumer können alternativ oder zusätzlich in der Zusammensetzung B enthalten sein.

Für den Fall, dass die Zusammensetzung A kein anorganisches und/oder organisches Bindemittel enthält, enthält die Zusammensetzung B ein anorganisches und/oder organisches Bindemittel. Es ist auch möglich, dass sowohl die Zusammensetzung A als auch die Zusammensetzung B ein anorganisches und/oder organisches Bindemittel enthalten.

Die Mikrohohlkugeln in der Hauptkomponente enthalten ein Treibmittel und weisen eine Polymerhülle auf.

Nach Zugabe der Zusammensetzung B (Initiator) wird die Polymerhülle durch ein Lösemittel geöffnet, d.h. die Polymerhülle wird zumindest an- oder aufgelöst, so dass das in der Mikrohohlkugel enthaltene Treibmittel freigesetzt wird. Die Mischung schäumt damit auf.

Die Mikrohohlkugeln und das Lösemittel liegen daher vor dem Zusammenbringen der Zusammensetzung A und der Zusammensetzung B funktional getrennt vor. Funktional getrennt liegen sie vor, wenn das An- oder Auflösen der Polymerhülle der Mikrohohlkugeln im Wesentlichen erst nach Zusammenbringen der Zusammensetzung A und der Zusammensetzung B erfolgt. Dies wird dadurch gewährleistet, dass die Mikrohohlkugeln und das Lösemittel in unterschiedlichen Zusammensetzungen (A und/oder B) vorliegen oder aber anderweitig voneinander getrennt werden. Es ist dabei nicht relevant, in welcher Zusammensetzung (A und/oder B) sich das anorganische und/oder organische Bindemittel befindet.

Durch das Wasser können die Viskosität und die Trocknungsgeschwindigkeit/ Reaktionszeit eingestellt werden. Basische Zuschlagsstoffe, z.B. NaOH oder KOH, erhöhen den pH-Wert und können die Härtungsreaktion katalysieren. Kleine Zugabemengen handelsüblicher Entschäumer können die Porengröße und Porenverteilung in die gewünschte Richtung regulieren und zu große Poren bzw.

Luftblasen verhindern, die zu technischen Problemen bei der Verarbeitung führen und zudem die Biegefestigkeit der Platten bzw. Formkörper mindern können.

Zusammenfassend sind in Tabelle 1 die möglichen Bestandteile der Zusammensetz-ung A mit ihrer jeweiligen Funktion dargestellt. Die Bestandteile können zusätzlich oder alternativ in der Zusammensetzung B enthalten sein.

**Tabelle 1: Bestandteile der Zusammensetzung A mit Funktion.**

| **Bestandteil** | **Funktion** |
|---|---|
| Bindemittel | Erhärten der Mischung aus Zusammensetzung A und Zusammensetzung B |
| Füllstoffe | Verminderung des Schwundes, Verbesserung der mechanischen Eigenschaften |
| Fasern | Verbesserung der mechanischen Eigenschaften |
| Mikrohohlkugeln mit Treibmittel | Aufschäumen nach Zugabe von Zusammensetzung B |
| Wasser | Einstellung der Viskosität und der Trocknungsgeschwindigkeit / Reaktionszeit |
| Base | Katalyse der Härtung und des Aufschäumens, Einstellung der Reaktionszeit |
| Entschäumer | Regulierung der Porengröße und- verteilung |
| Kunststoff-Dispersion | Verbesserung der Elastizität und Wasserbeständigkeit; kann zusätzlich zum Bindemittel und/oder als Bindemittel enthalten sein |

### Bindemittel

Die organischen und/oder anorganischen Bindemittel können durch physikalische oder chemische Vorgänge erhärten oder vernetzen. Das Bindemittel ist daher vorzugsweise erhärtbar oder vernetzbar. Bei der physikalischen Erhärtung ist das Bindemittel beispielsweise in einem Lösemittel suspendiert. Die Erhärtung erfolgt dann beispielsweise durch die Verdunstung bzw. Trocknung des Lösemittels. Beispiele sind Polyolefine, Vinylpolymere (z.B. Polyvinylacetat, Polyvinylalkohol), Styrol-Butadien-Copolymere und Polyacrylate (Acrylharze). Acrylharze basieren beispielsweise auf Polymerisaten oder Copolymerisaten der Acrylsäure, Methacrylsäure und deren Estern. Sie werden beispielsweise mit anderen ungesättigten Monomeren, wie Styrol oder Acrylnitril copolymerisiert.

Der chemischen Erhärtung liegt eine chemische Reaktion zugrunde; sie wird auch Vernetzung, Verharzung, Gelierung oder Polymerisation genannt. Chemisch kann die Erhärtung beispielsweise durch Oxidation und anschließender Polymerisation (z.B. trocknende Öle, Naturharze, Alkydharze oder Epoxidester), durch Polymerisation (z.B. Polyester), durch Polykondensation (z.B. Alkalisilikate, Phenolharze, Harnstoffharze und Melaminharze), durch Polyaddition (z.B. bei Reaktionsharzen wie Polyurethan und Epoxidharz) oder durch Kettenpolymerisation stattfinden.

Weitere mögliche Bindemittel sind SBR- Latices, Naturlatex, Neoprenlatex, Zement oder Gips.

Als mögliche Zementarten kommen beispielsweise in Betracht:
Die europäische Norm DIN EN 197-1 unterscheidet 27 sogenannte Normalzemente, die nach ihren Hauptbestandteilen in fünf Kategorien gegliedert werden. Dies sind:
- CEM I: Portlandzemente
- CEM II: Portlandkompositzemente
- CEM III: Hochofenzemente
- CEM IV: Puzzolanzemente
- CEM V: Kompositzemente

Die Hauptzementarten untergliedern sich entsprechend ihrer Hauptbestandteile in die Zementarten nach DIN EN 197-1 sowie Sonderzemente VLH nach DIN EN 14216:
- Portlandzement CEM I
- Portlandhüttenzement CEM II/-S
- Portlandsilicastaubzement CEM II/-D
- Portlandpuzzolanzement CEM II/-P und CEM II/-Q
- Portlandflugaschezement CEM II/-V und CEM II/-W
- Portlandschieferzement CEM II/-T
- Portlandkalksteinzement CEM II/-L und CEM II/-LL
- Portlandkompositzement CEM II/-M
- Hochofenzement CEM III / VLH III
- Puzzolanzement CEM IV / VLH IV
- Kompositzement CEM V / VLH V

Bevorzugt wird Portlandzement eingesetzt, es können aber auch andere Zementarten eingesetzt werden. Der Fachmann kann je nach Anwendungsbereich eine passende Zementart auswählen.

Als Gipsarten kommen beispielsweise in Betracht:
- Stuckgips
- Putzgips
- Mörtelgips
- Haftgips
- Maschinengipsputz
- Fugengips
- Spachtelgips
- Estrichgips
- Fertigputzgips
- Polymergips

Bevorzugt wird Haftgips eingesetzt, besonders bevorzugt Rotband.

In einer Ausführungsform ist das anorganische und/oder organische Bindemittel ein Kunststoff und liegt als Dispersion vor. Bei den Kunststoff-Dispersionen kommen alle vorgenannten Kunststoffe in Betracht, insbesondere Styrol-Butadien-Copolymere (insbesondere Styrol-Butadien-Acrylat), Acrylatdispersionen, Polyvinylacetat-Dispersionen, SBR-Latices, Naturlatex, Neoprenlatex, Polyurethan-Dispersionen oder Epoxidharz-Dispersionen. Besonders bevorzugt sind Kunststoff-Dispersionen, die alkaliresistent oder zementverträglich sind. Schäume mit einer Kunststoff-Dispersion zeigen eine hohe Elastizität und eine geringe Dichte. Dies gilt bereits für den Einsatz der Kunststoff-Dispersion zusätzlich zu einem (anderen) Bindemittel, es gilt jedoch auch für den Fall, dass die Kunststoff-Dispersion als Bindemittel eingesetzt wird.

Möglich sind auch flüssige Kunststoffe in nicht wässerigen Systemen, beispielsweise Silikonharz- oder Polyurethan-Systeme in flüssiger Form. Bevorzugt wird diesen ein Härter zugesetzt, um die Schaumstruktur zu fixieren.

Die chemische Erhärtung oder Vernetzung kann die Zugabe eines Härters, z.B. eines Carbonsäure-Esters, eines Vernetzungsmittels (z.B. Schwefel, Peroxide oder Metalloxide bei der Vulkanisation von Kautschuk), eines Katalysators (z.B. Säure oder Sikkative) oder die Zufuhr von Wärme oder UV-Strahlung erfordern. Die chemische Erhärtung, insbesondere die Erhärtung von Zement oder Gips, kann die Zugabe von einem Erstarrungsbeschleuniger erfordern. Beispiele für Erstarrungsbeschleuniger für Zement sind Calciumchlorid; alkalische Carbonate, wie Natriumcarbonat, Kaliumcarbonat, Calciumcarbonat; Aluminate wie Tricalciumaluminat; Calciumammoniumnitrat; Calciumnitrat oder basische Ammoniumsalze.

Beispiele für Erstarrungsbeschleuniger für Gips sind Calciumsulfatdihydrat (bevorzugt feingemahlen) oder Kaliumsulfat.

Eine physikalische Erhärtung ist ebenfalls denkbar, beispielsweise durch Entzug von Wasser. Dafür kommen beispielsweise Trocknungmittel oder "Superabsorber" in Betracht. Durch den Entzug des Wassers ist es möglich, den Schaum schnell zu stabilisieren und das Zusammenfallen zu verhindern. Besonders geeignet ist gebrannter Kalk, da dieser zusätzlich zum Binden des Wassers eine große Menge an Wärme während seiner Reaktion bereitstellt. Die freigesetzte Wärme in Kombination mit der Bindung des Wassers führt zu einem beschleunigten Abbinden und zur Stabilisierung des Schaumes.

Wenn die Bindemittel wie zum Beispiel Kunststoff-Dispersionen, Zement oder Gips nicht direkt mit dem Lösemittel, zum Beispiel mit 4-Methyl-1,3-dioxolan-2-on, reagieren können, können Härter eingesetzt werden, um den Schaum zu härten und zu stabilisieren.

Beispielsweise können Schäume, welche auf hydraulisch härtenden, anorganischen Bindemitteln, wie zum Beispiel Zement beruhen, mit dem Wasser der anderen Zusammensetzung reagieren. Um diese Reaktion zu beschleunigen, können Härter wie zum Beispiel Erstarrungsbeschleuniger, eingesetzt werden.

Um einen Schaum zu stabilisieren, der als Bindemittel eine Kunststoff-Dispersion enthält, können in der wasserfreien Zusammensetzung Härter verwendet werden, welche mit Wasser reagieren bzw. dieses binden. Dazu eigenen sich beispielsweise hydraulische Bindemittel, wie zum Beispiel Zement oder hydraulischer Kalk. Zement kann daher selbst als Bindemittel, aber auch als Härter eingesetzt werden. Außerdem eigenen sich Zusätze, welche eine große Menge an Wasser binden können, wie zum Beispiel Trocknungsmittel oder so genannte "Superabsorber". Insbesondere gebrannter Kalk ist geeignet, da dieser zusätzlich zum Binden des Wassers eine große Menge an Wärme während seiner Reaktion bereitstellt. Die freigesetzte Wärme in Kombination mit der Bindung des Wassers führt zu einem beschleunigten Abbinden und Stabilisierung des Schaumes. Aufgrund der Alkalität der anorganischen Bindemittel/Härter in Wasser werden in dieser Ausführungsform bevorzugt Kunststoff-Dispersionen verwendet, welche eine große Stabilität im alkalischen Milieu zeigen.

Das Bindemittel kann als Polymerdispersion auch durch Koagulation erhärten. Dies kann physikalisch oder chemisch induziert sein, beispielsweise scherinduziert oder durch Zugabe von Säuren oder Basen. Beispielsweise kann eine Kunststoff-Dispersionen, zum Beispiel SBR-Latices, durch gesteuerte oder gezielte Koagulation erhärten. Hierfür kommen beispielsweise Natriumsilikofluorid, Ammoniumacetat /Ammoniak durch Absenkung des pH-Wertes oder durch Zugabe von Elektrolyten wie Natriumchlorid, Calciumchlorid, Sulfate oder anderen Salze in Frage. Der Fachmann kann gezielt geeignete Zusätze auswählen.

In einer bevorzugten Ausführungsform der Erfindung wird das Bindemittel chemisch durch Polykondensation vernetzt. Es ist bevorzugt ein Alkalisilikat, besonders bevorzugt ein Natrium- oder Kaliumsilikat. Schmelzen von wässrigen Lösungen von Alkalisilikaten werden auch als Wasserglas bezeichnet. Zur Herstellung von Wasserglas wird beispielsweise hochreiner Quarzsand mit Alkalicarbonat geschmolzen. Dabei reagieren die beiden Edukte zu dem jeweiligen Alkalisilikat und zu Kohlenstoffdioxid. Aus der abgekühlten Schmelze entsteht eine glasartige und feste Struktur, die zu einem Pulver gemahlen wird. Dieses Pulver kann bei erhöhter Temperatur und erhöhtem Druck in Wasser gelöst werden.

Um die Härtung des Wasserglases zu initiieren, gibt es unter anderem drei Möglichkeiten:
1.) Durch ein Senken des pH-Wertes reagieren die Wasserglas-Moleküle in einer Säure-Base-Reaktion mit Wasser. Dadurch liegen sie nicht mehr in ihren Alkalisalzen vor, die elektrostatische Abstoßung sinkt und sie gehen über ihre Silanolgruppen Kondensationsreaktionen ein.
2.) Auch eine Zugabe von Salzen verringert die Abstoßung zwischen den negativ geladenen Silanolgruppen und führt zu Kondensationsreaktionen. Insbesondere mehrwertige Kationen ermöglichen eine Annäherung der Wasserglas-Monomere und eine anschließende Kondensationsreaktion.
3.) Die Kondensationsreaktion von Wasserglas ist eine Gleichgewichtsreaktion. Das Gleichgewicht wird in Richtung Kondensation verschoben, indem der Lösung Wasser entzogen wird. Dies wird durch erhöhte Temperaturen (thermisch) oder chemisch durch Zugabe von wasserbindenden Stoffen erreicht. Verwendet werden können Ester, welche mit Wasser zu einem Alkohol und einer Säure zerfallen. Ferner führt das entstehende CO₂ zu einer Härtung des Wasserglases durch Reaktion mit Alkalimetasilikat nach folgendem Schema:

   Me₂SiO₃ + H₂CO₃ → Me₂CO₃ + H₂SiO₃ (Gel SiO₂ • n H₂O)

Die Einsatzgebiete des Wasserglases sind vielseitig. Es kann als Flammenschutzmittel eingesetzt werden, da es hochtemperaturbeständig und feuerfest ist. Wasserglas eignet sich auch, um Oberflächen abzudichten. Deswegen können die erfindungs-gemäßen Schäume vorzugsweise als Oberflächenbeschichtung für Papier, Textilien und im Bautenschutz Verwendung finden. Besonders bevorzugt ist die Herstellung von brandfesten Leichtbauplatten.

Als Bindemittel können beispielsweise Polyolefine, Vinylpolymere, Styrol-Butadien-Copolymere, Polyacrylate, trocknende Öle, Naturharze, Alkydharze, Epoxidester, Polyester, Alkalisilikate, Phenolharze, Harnstoffharze, Melaminharze, Reaktionsharze, SBR- Latices, Naturlatex, Neoprenlatex, Zement, Gips oder Kombinationen davon eingesetzt werden. Alle Bindemittel erlauben die vorgenannten Anwendungen. Insbesondere eignen sie sich zur Herstellung von brandfesten Leichtbauplatten.

Bevorzugt werden als Bindemittel Alkalisilikate, Kunststoff-Dispersionen, Zement oder Gips eingesetzt.

Erfindungsgemäß besonders bevorzugt als Bindemittel sind Natrium- oder Kaliumsilikat (Natrium- oder Kalium-Wasserglas), insbesondere mit einem Feststoffgehalt von 25 bis 55 %.

In einer Ausführungsform enthält die Zusammensetzung A ein anorganisches Bindemittel, insbesondere ein Alkalisilikat, und ein organisches Bindemittel.

Durch das Verschäumen der erfindungsgemäßen Kombination erhält das fertige Endprodukt eine vorteilhaft geringe Dichte und gute Isoliereigenschaften. Die entstehenden Poren füllen sich zunächst mit Wasserdampf und im trockenen Zustand mit der Umgebungsluft. Durch die geringe Wärmeleitfähigkeit der in den Poren enthaltenden Luft kann das aufgeschäumte Produkt gut als Wärmeisolator wirken.

Das Produkt, zum Beispiel die Leichtbauplatte, kann von innen heraus aufgeschäumt werden und benötigt bevorzugt keine Schmelze während des Aufschäumens. Dadurch können die Energiekosten der Schmelze reduziert werden. Die Platte ist daher vergleichsweise kostengünstig zu produzieren.

In der Zusammensetzung A befinden sich Mikrohohlkugeln, die als Aufschäummittel dienen. Die Mikrohohlkugeln enthalten ein Treibmittel. Nach Zugabe und Mischen mit der zweiten Zusammensetzung werden die Mikrohohlkugeln angelöst bzw. aufgelöst und dadurch geöffnet, und das Treibmittel wird freigesetzt. Durch die Freisetzung des Treibmittels wird die Masse aufgeschäumt und mit fein und homogen verteilten Poren versetzt.

Je feinporiger der Schaum, desto stabiler sind in der Regel die aus der Schaummasse herstellbaren Formkörper oder Platten. Der Schaum kann visuell, gravimetrisch, aber auch anhand des resultierenden Volumens beschrieben werden. Des Weiteren lässt sich die mechanische Stabilität des fertigen Schaumes durch Versuche an einer Zugprüfmaschine ermitteln (siehe *infra,* Beispiele).

Die Herstellung einer Platte oder eines Formteils erfolgt vorzugsweise durch ein Vergießen der Mischung von Zusammensetzung A und B, bevor die Verschäumung erfolgt. Die dazu einsetzbare Form kann optional verschlossen und der Formkörper anschließend enttopft werden. Die Schaummasse kann dann getrocknet werden. Die Trocknungsparameter können je nach Größe und Form der Platte variieren. Eine Trocknung ist nicht zwingend erforderlich.

Durchschnittlich kann die Porengröße des Produkts zwischen 0,05 und 5 mm, bevorzugt zwischen 0,1 und 2 mm, besonders bevorzugt zwischen 0,1 und 1 mm, besonders bevorzugt zwischen 0,1 und 0,3 mm liegen. Mit dieser mittleren Porengröße kann das Produkt, zum Beispiel die Leichtbauplatte, als feinporig bezeichnet werden [KSW Sing (1985). Pure and Applied Chemistry, 57(4): S. 603-619].

Die Mikrohohlkugeln können einen Durchmesser D₅₀ von 5 bis 100 µm, bevorzugt 5 bis 50 µm, noch bevorzugter 10 bis 30 µm, haben. In einer bevorzugten Ausführungsform haben die Mikrohohlkugeln einen Durchmesser D₅₀ von 10 bis 16 µm. Sie weisen eine Polymerhülle auf und enthalten ein Treibmittel. Bevorzugt werden Polymerhüllen mit einem geringen Brennwert. Prinzipiell sind alle Polymerhüllen geeignet, die sich durch ein Lösemittel, bevorzugt ohne Wärmezufuhr, an- bzw. auflösen und somit öffnen lassen.

Die Polymerhülle umfasst ein Polymer, beispielsweise EVA (Ethylen-Vinylacetat Copolymer); Polyvinylidenchlorid und/oder Acrylnitril; Acrylnitril, Methylmethacrylat und/oder Methacrylnitril, oder Kombinationen davon; bevorzugt Acrylnitril und/oder Methacrylnitril, ganz besonders bevorzugt Acrylnitril und Methacrylnitril.

Das Treibmittel ist bevorzugt ein Treibgas. Die Auswahl des Treibmittels ist unbe-grenzt. Bevorzugt werden Treibmittel verwendet, welche nach der Freisetzung ein größeres Volumen einnehmen. Daher können flüssige Treibmittel gegenüber gasförmigen Treibmitteln bevorzugt werden. Vorteilhaft sind Treibmittel, die nicht brennbar und chemisch inert sind.

Beispiele für Treibmittel sind Flüssiggase (bei Raumtemperatur und geringer Kompression, z.B. <10 bar flüssig) umfassend kurzkettige Kohlenwasserstoffe ausgewählt aus Propan, Butan, Isobutan, Pentan, Isopentan oder Kombinationen davon; Dimethylether, Luft, CO₂, Stickstoff, FCKW oder Kombinationen davon. Beispielsweise kann eine Mischung aus Propan und Butan eingesetzt werden. Ganz besonders bevorzugt ist Isobutan.

Mikrohohlkugeln werden auch als Mikrosphären bezeichnet. Es können beispielsweise Mikrohohlkugeln des Typs Expancel^{®} der Firma Akzo Nobel verwendet werden, beispielsweise die Expancel^{®}-Mikrohohlkugeln des Typs 461 DU 20, 551 WU 20, 031 WUF 40 oder 031 DU 40, besonders bevorzugt des Typs 031 WUF 40 oder 031 DU 40. Weitere Hersteller von möglichen Mikrohohlkugeln sind Kureha oder Matsumoto.

### Fasern

In der Zusammensetzung A können optional Fasern enthalten sein, beispielsweise Mineralwolle, Glasfaser, Polyacrylnitril oder Naturfasern z.B. Seegras. Bevorzugt werden Mineralwolle oder Glasfasern oder Kombinationen davon verwendet. Die Fasern können die Biegefestigkeit eines aus der Kombination hergestellten Produkts positiv beeinflussen. Bevorzugt haben die Fasern eine mittlere Fasernlänge von 0,05 bis 6 mm, besonders bevorzugt kleiner gleich 0,25 mm.

Die Fasern können auch zusätzlich oder alternativ in der Zusammensetzung B enthalten sein.

Die Fasern können in einem Anteil von etwa 0,5-4 Gew.-% an der Gesamtrezeptur in die Kombination aufgenommen werden. Bevorzugt werden Anteile von etwa 2-3 Gew.-%. Besonders bevorzugt werden Glasfasern in einem Gewichtsanteil von etwa 2 Gew.-% an der Gesamtrezeptur.

Bevorzugt wird eine mittlere Länge von unter 0,25 mm, bevorzugt kleiner 0,20 mm, besonders bevorzugt etwa 0,18 mm. Bevorzugt wird ein Durchmesser von etwa 9-14 µm.

Bevorzugt ist die optionale mindestens eine Faser Mineralwolle oder Glasfaser, hat eine mittlere Länge von ≤ 0,25 mm und ist zu einem Anteil von 0,5-4 Gew.-% in der Kombination enthalten.

### Zusammensetzung B

Die Zusammensetzung B umfasst ein Lösemittel. Das Lösemittel dient dazu, die Polymerhülle der Mikrohohlkugeln zu öffnen. Dazu wird diese zumindest an- oder aufgelöst. Daher ist erfindungsgemäß jedes Lösemittel geeignet, das die Polymerhülle der verwendeten Mikrohohlkugeln an- oder auflösen kann.

Erfindungsgemäß einsetzbare Lösemittel sind vorzugsweise ausgewählt aus der folgenden Gruppe: polare Lösemittel wie Aceton, Nitromethan oder Dimethylsulfoxid oder organische Carbonsäure-Ester (R¹-O-C(=O)-O-R² mit R¹,R² = Alkyl-, Allyl- und/oder Arylreste) oder eine Kombination davon; bevorzugt ein Carbonsäure-Ester. Der Carbonsäure-Ester kann aus der folgenden Gruppe ausgewählt sein: Dimethoxyameisensäureanhydrid, 1,3-Dioxolan-2-on, 4-Methyl-1,3-Dioxolan-2-on, 4-Hydroxymethyl-1,3-Dioxolan-2-on oder Kombinationen davon; und ist bevorzugt 1,3-Dioxolan-2-on oder 4-Methyl-1,3-Dioxolan-2-on oder eine Kombination davon.

Besonders geeignet, die Polymerhülle der Mikrohohlkugeln schnell zu öffnen, sind bei einer Polymerhülle mit Acrylnitril und/oder Methacrylnitril polare Lösemittel mit hohem Dipolmoment. So reagiert Aceton (ε=20) zwar mit der Polymerhülle, jedoch langsamer als 4-Methyl-1,3-dioxolan-2-on (ε=65). Besonders bevorzugt sind daher, insbesondere bei einer Polymerhülle mit Acrylnitril und/oder Methacrylnitril, 1,3-Dioxolan-2-on und 4-Methyl-1,3-dioxolan-2-on. Beide Lösemittel können die Polymerhülle schnell öffnen.

Die Zusammensetzung B kann vorzugsweise einen Härter zum Härten oder Vernetzen des anorganischen und/oder organischen Bindemittels enthalten. Der Härter dient dazu, die erzeugte Schaumstruktur zu fixieren und das Bindemittel auszuhärten. Härter können zum Beispiel sein: Carbonsäure-Ester oder Erstarrungsbeschleuniger. Es kann auch ein Vernetzungsmittel (z.B. Schwefel, Peroxide oder Metalloxide bei der Vulkanisation von Kautschuk), ein Katalysator (z.B. Säure oder Sikkative) oder die Zufuhr von Wärme oder UV-Strahlung für die Erhärtung eingesetzt werden. Vernetzungsmittel oder Katalysatoren werden ebenfalls als Härter bezeichnet. Der Härter kann je nach Zusammensetzung auch oder alternativ in der Zusammensetzung A enthalten sein.

Das Lösemittel und der Härter können dieselbe Verbindung sein, es kann sich aber auch um unterschiedliche Verbindungen handeln. Bevorzugt ist das Lösemittel dieselbe Verbindung wie der Härter. Besonders bevorzugt ist ein Härter, der bei der Kondensations-Reaktion ein Gas freisetzt, das die Verschäumung unterstützt.

Die Zusammensetzung B kann optional Wasser enthalten. Dadurch wird das Volumen der Zusammensetzung B erhöht, so dass das Mischungsverhältnis mit der Zusammensetzung A vorteilhaft eingestellt werden kann.

Wasser kann auch zusätzlich oder alternativ In der Zusammensetzung A enthalten sein.

In einer bevorzugten Ausführungsform enthält die Kombination mindestens einen Füllstoff, z.B. zur Erhöhung der Viskosität, und/oder ein Verdickungsmittel. Das Verdickungsmittel kann dazu dienen, den anorganischen Füllstoff im Lösungsmittel in Schwebe zu halten und/oder den Füllstoff zu stabilisieren.

Im Folgenden werden die in der erfindungsgemäßen Mischung von Zusammensetzung A und Zusammensetzung B ablaufenden Vorgänge anhand des Lösemittels/Härters Carbonsäure-Ester und dem Bindemittel Wasserglas erläutert.

Werden Hauptkomponente und Initiator zusammengemischt, reagiert der Carbonsäure-Ester gemäß der folgenden Formel:

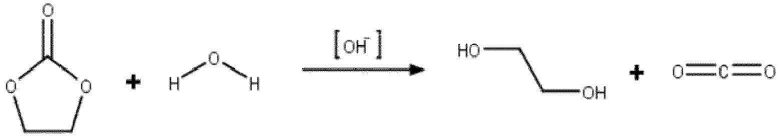

Der Ester entzieht dem Stoffgemisch, also der Kombination (Zusammensetzung A + B), Wasser und es entsteht ein zweiwertiger Alkohol (Diol) und CO₂. Durch den Wasserentzug wird das Polymer-Gleichgewicht des Wasserglases in Richtung Kondensation verschoben und das Wasserglas härtet aus. Parallel zu der Hydrolyse des Esters werden die Mikrohohlkugeln durch den Initiator an- bzw. aufgelöst und das Treibmittel freigesetzt. Dadurch schäumt das Wasserglas auf. Des Weiteren schäumt auch das durch die Ester-Spaltung entstehende CO₂ das Wasserglas auf bzw. wirkt auch gleichzeitig als Härter für das Wasserglas. Die Reaktion wird durch die Hydroxid-Ionen in der alkalischen Hauptkomponente katalysiert.

In einer bevorzugten Ausführungsform kann die Kombination die Zusammensetzung A und die Zusammensetzung B in einem Verhältnis A:B zwischen 100:1 und 100:30, bevorzugt 4-20:1, besonders bevorzugt 8-12:1, weiterhin besonders bevorzugt 10:1 oder 4:1 oder 3,5:1 umfassen. Das Verhältnis hängt von der gewünschten Reaktionszeit und dem Anteil des Carbonsäure-Esters ab. Das Verhältnis hängt auch von dem verwendeten Bindemittel ab. Es hängt auch davon ab, welche Bestandteile in der Zusammensetzung A (außer den Mikrohohlkugeln) und der Zusammensetzung B (außer dem Lösemittel) enthalten sind. Das Verhältnis kann auch umgekehrt sein, d. h. A:B von 1-30:100, bevorzugt 1:4-20, besonders bevorzugt 1:4.

Die Geschwindigkeit der Reaktion kann durch Temperatur, Wasserzugabe, Viskositätseinstellung und über den pH-Wert gesteuert werden.

Die Startzeit der Verschäumung kann auch vom Grad der Vermischung abhängig sein. Beim Vermischen der beiden Zusammensetzungen mit einer hohen Schergeschwindigkeit und einer sogenannten Dispergierscheibe kann beispielsweise eine sofortige Verschäumung eintreten. Im Gegensatz dazu können niedrige Schergeschwindigkeiten und andere Rührer-Typen, wie zum Beispiel Balken- oder Propeller-Rührer, zu einer verzögerten Verschäumung führen.

Insbesondere ist es auch Gegenstand der Erfindung, Mikrohohlkugeln durch Zugabe eines Lösungsmittels zu öffnen und somit das Treibmittel freizusetzen. Damit ist es möglich, Schaummassen nicht wie üblich durch thermische Expansion der Treibmittelgefüllten Mikrohohlkugeln herzustellen, sondern auch ohne Wärmezufuhr und zwar durch Zerstörung des Kapselmaterials (der Polymerhülle) und Freisetzung des Treibmittels.

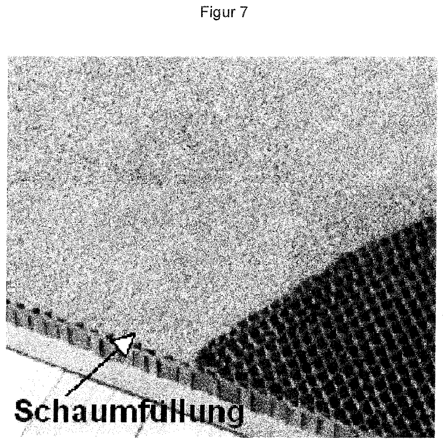

Eine weitere Anwendung besteht in der Ausschäumung der Hohlräume einer Wabenplatte, wie beispielsweise in Figur 7 gezeigt. Dadurch kann eine nichtbrennbare Leichtbauplatte hergestellt werden. Eine untere Decklage wird beispielsweise mit einer expandierten Wabenplatte, wie sie beispielsweise aus Karton, Aluminium oder diversen Polymerwerkstoffen erhältlich sind, belegt. Nun wird ein erfindungsgemäßer Schaum durch Zusammenbringen und Rühren der beiden Zusammensetzungen hergestellt und gleichmäßig in den Wabenkompartiments verteilt. Anschließend kann auf den Wabenträger eine zweite, obere Decklage aufgelegt werden. Die eingebrachte Mischung schäumt vorzugsweise nach variabel einstellbaren Reaktionszeiten auf und füllt die Hohlräume der Wabe mindestens teilweise und vorzugsweise komplett aus. Auch die aufgebrachten Decklage wird vorzugsweise vom Schaum erfasst und fest bis dauerhaft mit dem Wabenkern verbunden.

Nach dem Aushärten und Abtrocknen erhält man beispielsweise eine leichte Platte mit zwei funktionalen Decklagen und einem massiven Schaumkern, die nach dem Formatieren mit einem entsprechenden Kantenumleimer versehen werden kann.

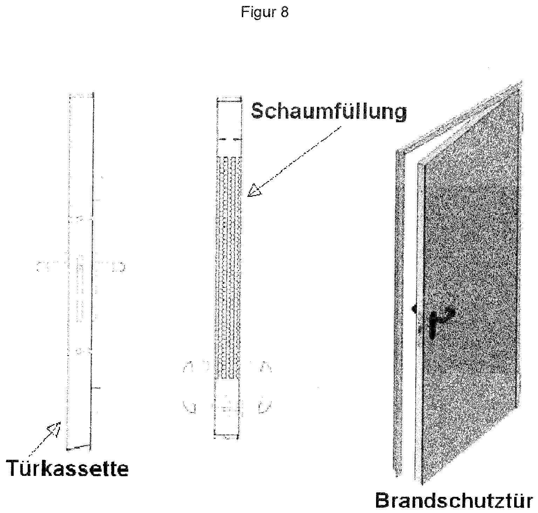

Derartige nichtbrennbare, leichte Schaumplatten finden beispielsweise Anwendung als Trägerplatten für dekorative Elemente im Bauwesen, als Füllungen für Türen und ähnliche Wandelemente. Eine solche Tür mit Schaumfüllung (Brandschutztür) ist beispielsweise in Figur 8 gezeigt.

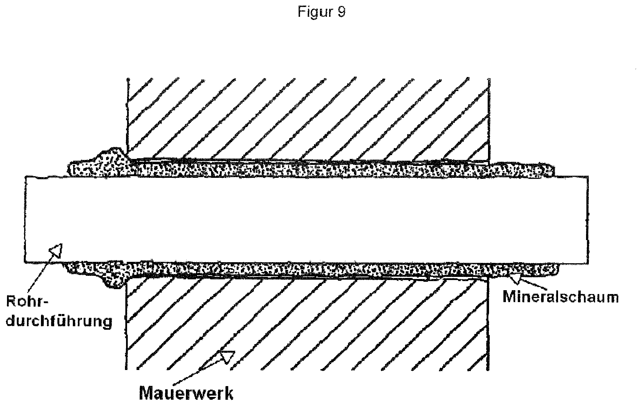

Eine weitere Anwendung besteht in der Ausschäumung von einem Hohlraum zwischen einer Rohrdurchführung und beispielsweise einem Mauerwerk. Hier kann insbesondere ein Mineralschaum (beispielsweise Zement oder Gips als Bindemittel) eingesetzt werden. Eine solche Anwendung ist in Figur 9 dargestellt.

Die unter Verwendung der erfindungsgemäßen Kombination herstellbaren Platten oder Formteile weisen bevorzugt die Baustoffklasse A1 (nicht brennbar), A2 oder B, insbesondere die Baustoffklasse A1, auf (die Brandprüfung kann nach DIN 4102-1 erfolgen). Die fertigen Teile sind daher bevorzugt nicht brennbar und/oder wirken überdies brandhemmend, indem kühlende Wasserdämpfe freigesetzt werden. In einem besonders bevorzugten Aspekt der Erfindung wird daher ein Brandschutzmittel bereitgestellt, hergestellt unter Verwendung der erfindungsgemäßen Kombination bzw. Schaummasse.

Andere Anwendungsbereiche, bei denen die Brennbarkeit der Formteile keine Rolle spielt, sind ebenfalls denkbar.

Ein besonderer Vorteil der erfindungsgemäßen Kombination ist, dass sie in einer Ausführungsform kaltverschäumbar ist und somit (wie beispielsweise bei PU-Bauschaum üblich) eine "Vor-Ort-Verschäumung" (= Ortschaum) aus 2K-Kartuschen (2-Komponentensystem) zulässt und keinen großen Ausrüstungs-/Geräteaufwand z.B. für eine thermische Aufschäumung erfordert. Außerdem kann der Bauschaum bei Bedarf größtenteils aus anorganischen, nicht brennbaren Komponenten hergestellt werden (für die Baustoffklasse A1).

In einer Ausführungsform können die beiden Zusammensetzungen A und B in jede beliebige Form gegossen werden. Der Bauschaum, insbesondere Ortschaum, eignet sich als Füll-, Konstruktions-, Isolations-, Brandschutz- oder Dämmschaum. Besonders bevorzugt werden aus dem Ortschaum Formteile und Leichtbauplatten hergestellt.

In einem weiteren Aspekt der Erfindung wird ein Verfahren zum Öffnen von Mikrohohlkugeln wie oben definiert bereitgestellt, das dadurch gekennzeichnet ist, dass die Mikrohohlkugeln mit einem Lösemittel zusammengebracht werden. Dieses Verfahren kann bei einer Temperatur von unter 50°C, insbesondere bei Raumtemperatur, durchführbar sein. Bevorzugt werden die Mikrohohlkugeln ohne äußere Wärmezufuhr bei Raumtemperatur geöffnet.

### Beispiele

Die Erfindung wird in den nachfolgenden Ausführungsbeispielen näher erläutert, wobei der Auswahl der Beispiele keine Beschränkung des Umfanges des Erfindungsgegenstandes darstellen soll. Die Beispiele sollen lediglich in modellhafter Weise einzelne Ausführungsformen und vorteilhafte Wirkungen der Erfindung darstellen.

### 1. Herstellung einer Leichtbauplatte

Im Labormaßstab werden die Hauptkomponente und der Initiator im Verhältnis 10:1 für 20 Sekunden mit einem Propeller-Rührer gemischt. Anschließend wird das Gemisch in eine Form gegossen und mit einem Deckel verschlossen. Nach ca. zehn Minuten ist die aufgeschäumte Platte enttopfbar und kann aus ihrer Form genommen und getrocknet werden. Die Trocknungsparameter können je nach Größe und Form der Platte variiert werden.

Vorzugsweise wird können Leichtbauplatten großtechnisch so hergestellt werden, dass Zusammensetzung A und B jeweils über eine Pumpe in einen statischen Mischer gepumpt und über dessen Querschnitt vermischt werden. Anschließend kann das Gemisch durch eine Düse in eine Form eingebracht und diese verschlossen werden.

Durch den jeweiligen Volumenstrom der beiden Pumpen lässt sich das Mischverhältnis einstellen. Die Länge des statischen Mischers bestimmt zusätzlich die Mischzeit und den Homogenisierungsgrad. Nach ca. zehn Minuten wird die Form geöffnet, die Platten enttopft und getrocknet.

### 2. Messung der Biegefestigkeit

Zur Bestimmung der Biegefestigkeit (auch Bruchfestigkeit genannt) und des Elastizitätsmoduls wurden Versuche an einer Zwickprüfmaschine des Typs 143 501 durchgeführt.

### Probenvorbereitung:

Es wurden Leichtbauplatten mit den Abmessungen 8 cm x 10 cm x 2,5 cm hergestellt. Dazu wurden 90 Gramm der Zusammensetzung A mit neun Gramm des Initiators verrührt und in eine Form gegeben. Nach dem Befüllen wurde die Form mit einem Deckel verschlossen und mit einem Gewicht beschwert. Im Anschluss an das Entformen wurden die Platten getrocknet. Die Trocknung fand auf einem Gitterrost statt, um eine gleichmäßige Trocknung aller Seite zu gewährleisten.

Für die Versuche zur Bestimmung der Biegefestigkeit wurden aus diesen Platten Proben mit den Maßen 4 cm x 2 cm x 1,5 cm (Breite x Länge x Höhe) gesägt.

Um das Elastizitätsmodul zu bestimmen, wurden Proben mit den Maßen 2 cm x 8,5 cm x 1,5 cm (Breite x Länge x Höhe) gesägt. Zur Messung der Durchbiegung war es notwendig, dass die Proben eine größere Länge hatten.

Für die Zug- und Biegeversuche kann eine Materialprüfmaschine des Herstellers Zwick genutzt werden.

### Versuchsaufbau:

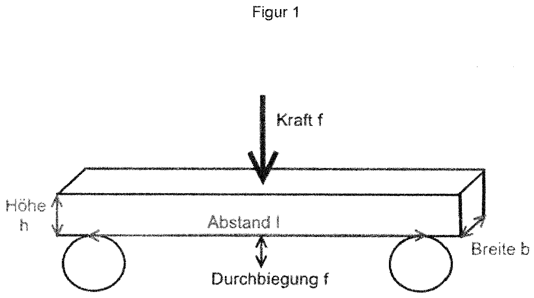

Figur 1 beschreibt schematisch den Aufbau der Messung: Auf den beiden runden Auflegern mit dem Abstand I, der von Mittelpunkt zu Mittelpunkt gemessen wird, wird die Probe mit der Breite b und der Höhe h gelegt. Mittig unter der Probe befindet sich ein Sensor, welcher die Durchbiegung f der Probe misst. Über der Probe befindet sich ein Druckstempel, der Kraft auf die Mitte der Probe ausübt.

### Messparameter:

Der Vorschaltkraftwert wurde auf 200 N eingestellt. Ab einer Differenz von zehn [N] wurde ein Materialbruch erkannt. Die maximale Kraft wurde auf 950 [N] eingestellt. Der Vorschub wurde auf 2 [mm/Min] festgelegt. Zusammengefasst befinden sich die verwendeten Messparameter in Tabelle 2.

**Tabelle 2: Messparameter der Zugprüfmaschine.**

| **Parameter** | **Wert** |
|---|---|
| Vorschaltkraft | 200 N |
| ΔF | 10 N |
| Fₘₐₓ | 950 N |
| Vorschub | 2 mm/Min |

### 3. Einfluss einer Faser in Zusammensetzung A auf die Biegefestigkeit

In der Zusammensetzung A können optional Fasern enthalten sein. Um eine geeignete Faser auszuwählen, wurden zunächst verschiedene Mineralwoll-, Glas- und Kunststofffasern (Polyacrylnitril) in gleichen Mengen (2,5 Gew. %) in die Kombination eingefügt. Die Platten wurden nach der entwickelten Vorschrift getrocknet und ihre Biegefestigkeit gemessen.

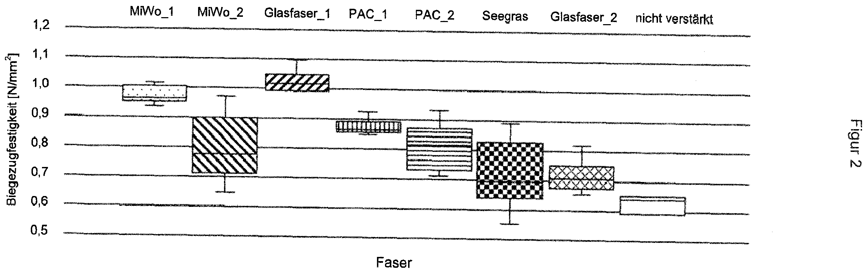

Figur 2 stellt die Biegefestigkeiten der verwendeten Fasern dar. In der folgenden Tabelle 3 befinden sich die Eigenschaften der verwendeten Fasern. Die Auswertung zeigt, dass sich MiWo_1 und Glasfaser_1 besonders zur Verstärkung der Platten eignen. Fasern, welche länger als 0,25 mm waren, erhöhten die Viskosität der Kombination. Dadurch entstanden Inhomogenitäten in der Platte, welche sich durch eine große Streuung der Biegezugfestigkeiten zeigten.

**Tabelle 3: Verwendete Fasertypen und Eigenschaften.**

| **Bezeichnung** | **Faser Typ** | **Länge [mm]** | **Durchmesser [µm]** |
|---|---|---|---|
| MiWo_1 | Mineralwolle | 0,25 | 5,5 |
| MiWo_2 | Mineralwolle | 0,50 | 5,5 |
| Glasfaser_1 | Glas | 0,18 | 9-14 |
| PAC_1 | Polyacrylnitril | 0,50 | 27,0 |
| PAC_2 | Polyacrylnitril | 3,00 | keine Angaben |
| Seegras | Seegras | < 3,00 | keine Angaben |
| Glasfaser_2 | Glas | 3,00 | 20,0 |

### 4. Einfluss des Faser-Anteils auf die Biegefestigkeit

Es wurden zwei Fasern (MiWo_1 und Glasfaser_1, siehe Tabelle 3) ausgewählt. Es wurden verschiedene Anteile an der Gesamtrezeptur getestet. Dazu wurden ein bis vier Gewichtsprozent der Fasern in die flüssige Kombination gegeben und die Biegefestigkeit der verstärkten Leichtbauplatten in einer Fünffach-Bestimmung gemessen.

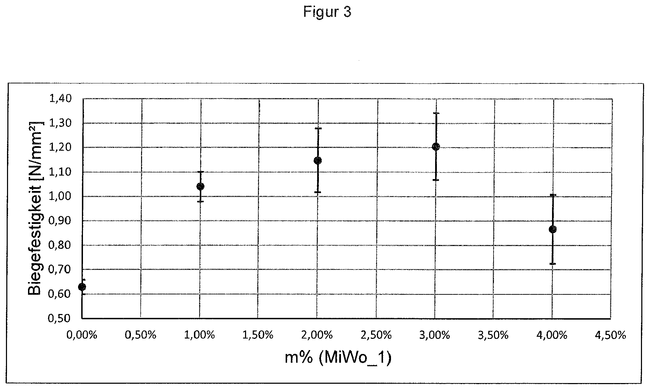

Die Messung der mit MiWo_1 verstärkten Leichtbauplatte ist in Figur 3 dargestellt. Die höchste Biegefestigkeit wird bei einem Gewichtsanteil von drei Prozent mit einer Biegefestigkeit von 1,20 ± 0,14 [N/mm²] erreicht. Höhere Mineralwollfaser-Anteile senken die Biegefestigkeit, möglicherweise da sie das System zu sehr verdicken. Auch die hohe Standardabweichung der Fünffach-Bestimmung lässt sich durch das Verdicken erklären. Die höhere Viskosität erschwert eine homogene Verteilung der flüssigen Kombination in der Form.

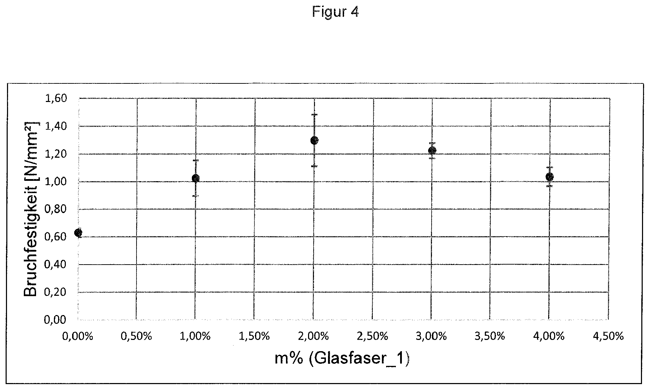

Die maximale Biegefestigkeit der mit Glasfaser_1 verstärkten Leichtbauplatte liegt bei zwei Gewichtsprozent Faser mit 1,30 ± 0,19 [N/mm²]. Figur 4 beschreibt den Zusammenhang zwischen dem Glasfaser-Gewichtsanteil und der resultierenden Biegezugfestigkeit.

Glasfasern und Mineralwolle-Fasern eignen sich beide gut, um die Biegefestigkeit eines Produkts der Kombination zu erhöhen. Mit Glasfasern kann in diesem Beispiel eine etwas höhere Biegefestigkeit erzielt werden. Außerdem wird in diesem Beispiel von der Glasfaser ein Gewichtsprozent weniger benötigt und sie erhöht die Viskosität des Systems weniger.

### 5. Einfluss einer Polymerdispersion auf die Elastizität

Zur Verminderung der Steifigkeit kann der Platte eine Kunststoff-Dispersion zugesetzt werden. Um die Steifigkeit zu beurteilen, kann das Elastizitätsmodul gemessen wer-den.

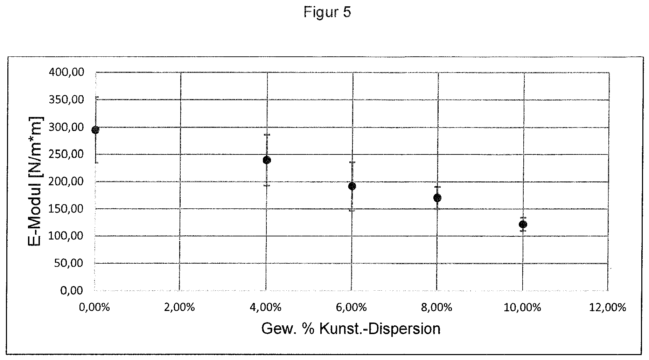

In Figur 5 ist das Elastizitäts-Modul in Abhängigkeit des Anteils an Kunststoff dargestellt. Mit zunehmendem Kunststoff-Anteil (in Gew.-%) sinkt das E-Modul der Leichtbauplatte. Durch die Zugabe von bis zu zehn Gew.-% Kunststoff-Dispersion (bezogen auf die Gesamtmasse des Systems) konnte das Elastizitäts-Modul von 294,86 ± 60,28 [N/mm²] auf 122,14 ± 12,42 [N/mm²] gesenkt werden.

### 6. Wärmeleitung

Um die Wärmeleitung eines Materials zu charakterisieren, wird die Stoffeigenschaft der Wärmeleitfähigkeit (λ) genutzt. Je kleiner die Wärmeleitfähigkeit eines Stoffes, desto weniger Wärme überträgt dieser pro Zeit- und Längeneinheit.

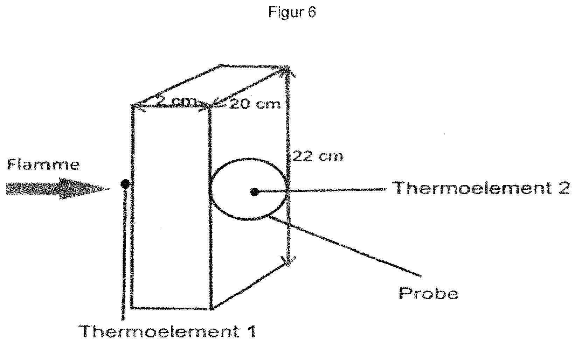

Es wurden zylinderförmige Probestücke mit einem Durchmesser von 3,5 cm und einer Höhe von 2,5 cm vorbereitet. Diese wurden für zwei Tage bei Raumtemperatur getrocknet und anschließend mindestens acht Stunden bei 80°C in den Trocken-schrank gelegt. Anschließend wurden die Probenzylinder in eine isolierte Vorrichtung gesetzt, welche in Figur 6 dargestellt ist. Die Vorderseite der Vorrichtung wurde mit einem Gasbrenner auf ca. 600°C erwärmt. Zur Messung der Temperatur wurden auf der Vorderseite und der Rückseite Thermoelemente befestigt. Die Erwärmung der eingesetzten Probe wurde für ca. 20 Minuten gemessen. Außerdem wurde beobachtet, ob die Proben brennen oder rauchen.

Anhand von Proben mit einer bekannten Wärmeleitfähigkeit (λ) wurde eine Kalibriergerade erstellt, um die Wärmeleitfähigkeit der Proben zu erhalten.

### 7. Einfluss von Fasern auf die Wärmeleitfähigkeit

Die Wärmeleitfähigkeiten von mit Mineralwolle_1- und Glasfaser_1 verstärkten Leichtbauplatten sind in Tabelle 4 beschrieben. Der Zusatz der Mineralwollfasern erhöht die Wärmeleitfähigkeit und verschlechtert folglich die Isolierwirkung. Dies könnte auf eine Erhöhung der System-Viskosität zurückzuführen sein. Während der Herstellung wird das Aufschäumen durch das viskosere System gebremst. Durch die geringere Porenanzahl verliert die Leichtbauplatte an Isolierwirkung. Die verwendete Glasfaser_1 erhöht die Systemviskosität in der verwendeten Menge (Gew. % =< 4%) nicht. Dadurch wird die verstärkte Leichtbauplatte homogen aufgeschäumt und die Wärmeleitfähigkeit bleibt im Vergleich zur nicht verstärkten Probe unverändert.

**Tabelle 4: Wärmeleitfähigkeit der faserverstärkten Leichtbauplatten.**

| **Probe** | λ**[W/m*K]** |
|---|---|
| Nicht verstärkt | 0,09 |
| 1% MiWo_1 | 0,17 |
| 4% MiWo_2 | 0,16 |
| 1%Glasfaser_1 | 0,09 |
| 4% Glasfaser_2 | 0,10 |

### 8. Einfluss einer Polymerdispersion auf die Wärmeleitfähigkeit

Der Einfluss von vier bis acht Gew.-% Kunststoff-Dispersion auf die Wärmeleitfähigkeit einer Leichtbauplatte ist in Tabelle 5 dargestellt. Es wurde festgestellt, dass die Wärmeleitfähigkeit mit dem Kunststoffanteil steigt.

**Tabelle 5: Wärmeleitfähigkeit verschiedener Kunststoffanteile.**

| **Probe** | **λ [W/m*K]** |
|---|---|
| Nicht verstärkt | 0,09 |
| 4% Kunststoff | 0,10 |
| 6% Kunststoff | 0,16 |
| 8% Kunststoff | 0,25 |

### 9. Brandprüfung

Es wurde eine Brandprüfung nach der Norm DIN 4102-1 durchgeführt. Dieser Test dient der Klassifizierung der Baustoffklasse und simuliert einen Brand. Angestrebt wurde die Klasse A1 (nicht brennbar) für eine mit Glasfaser_1. Geprüft wurde eine mit zwei Gew.-Prozent Glasfaser_1 verstärkte Leichtbauplatte, da diese durch ihre mechanischen Eigenschaften und ihre geringe Wärmeleitfähigkeit in diesem Beispiel besonders vorteilhaft ist.

Es wurden mehrere Proben mit einer Länge und Breite von jeweils vier cm ausgesägt. Anschließend wurden diese übereinandergestapelt und zugesägt, so dass sie eine Höhe von 5 cm hatten. Die DIN 4102-1 erfordert eine Fünffach-Bestimmung. Deswegen wurden fünf dieser Proben vorbereitet, bei 105°C für 6 Stunden getrocknet und anschließend im Exsikkator über CaCl₂ getrocknet. Das "Proben-Sandwich" wurde in ein Gittergerüst gelegt.

Der Ofen wurde auf 750°C vorgeheizt. Danach wurde die Probe innerhalb von fünf Sekunden in den Ofen eingehangen. Über der Ofenöffnung befand sich eine Propangasflamme. Um zu überprüfen, ob sich brennbare Gase während des Versuchs bilden, wurde beobachtet, ob sich die Flamme vergrößert. Außerdem wurde über einen Spiegel beobachtet, ob sich Flammen im Ofen bilden. Die Probe wurde so lange im Ofen gelassen, bis die Ofentemperatur ihr Maximum überschritt. Es wurden der Glühverlust in Höhe und Gewicht, die maximale Ofentemperatur und die Flammenvergrößerung notiert.

In Tabelle 6 ist die Auswertung der fünf Proben dargestellt. Die mit Glasfaser_1 verstärkte Leichtbauplatte besteht den Brandtest auf die Bauklasse A1 nach DIN 4102-1. Es bildeten sich keine Flammen innerhalb des Ofens. Die Propangasflamme über der Öffnung des Ofens wurde nicht vergrößert. Sie wurde durch den Wasserdampf aus der Platte gelöscht und konnte erst nach fünf Minuten wieder entzündet werden. Die Platten verloren im Mittel 1 cm an Höhe und 15,68% ± 0,26% ihres Gewichtes. Zusätzlich wurde in einem Bombenkalorimeter der Heizwert der Platte bestimmt. Dieser lag nach einer Dreifachbestimmung bei 2054,3 ± 41,2 [J/g].

**Tabelle 6: Auswertung des Brandversuchs der mit Glasfaser_1 verstärkten Leichtbauplatte.**

| **Probe** | **Dauer [Min.]** | **ΔT [K]** | **Glühverlust [%]** | **Schrumpf [cm]** | **Flamme entzündet [Min.]** |
|---|---|---|---|---|---|
| **A** | 90 | 61 | 15,41% | 1,00 | 0 |
| **B** | 30 | 14 | 15,61% | 1,00 | 0 |
| **C** | 30 | 19 | 15,42% | 1,10 | 0 |
| **D** | 30 | 22 | 15,90% | 0,90 | 0 |
| **E** | 30 | 23 | 16,06% | 1,00 | 0 |

### 10. Beispielhafte Rezeptur der Kombination

Beispielhaft werden folgende Bereiche von Bestandteilen der Zusammensetzung A und der Zusammensetzung B aufgeführt:

**Zusammensetzung A**

| **Rohstoff** | **Anteil in Gew.-Prozent** |
|---|---|
| Wasserglas | 40-60% |
| Wasser | 0-10% |
| KOH | 0-5% |
| Entschäumer | 0-0,5% |
| Füllstoff | 10-40% |
| Mikrohohlkugeln | 1-5% |
| Weitere Additive (Fasern, Kunststoff- Dispersion) | 0-4% |

Das Wasserglas ist beispielsweise Natrium- oder Kaliumsilikat mit einem Feststoffgehalt von 25 bis 55 %, beispielsweise Natronwasserglas 37/40. Als Füllstoff werden bevorzugt anorganische Mineralien eingesetzt. Weitere Bestandteile können Glas- bzw. Mineralwollfasern mit einer mittleren Faserlänge von ca. 50 µm bis ca. 500 µm sein. Des Weiteren kann zur Verbesserung der Elastizität und der Wasserbeständigkeit eine Kunststoff-Dispersion zugesetzt werden.

**Zusammensetzung B**

| **Rohstoff** | **Anteil in Gew.-Prozent** |
|---|---|
| Lösemittel/Härter | 20-80% |
| Füllstoff | 0-60% |
| Verdicker | 0-10% |

Der Lösemittel und der Härter sind in diesem Beispiel dieselbe Verbindung, beispielsweise 1,3-Dioxolan-2-on oder 4-Methyl-1,3-Dioxolan-2-on. In Abhängigkeit von der gewünschten Reaktionszeit und dem Anteil des Carbonsäure-Esters in der Zusammensetzung B erhält man durch ein Mischungsverhältnis A:B von etwa 1-20:1, bevorzugt 8-12:1, besonders bevorzugt 9-11:1, besonders bevorzugt 10:1 einen vorteilhaften Schaum.

In einer besonders bevorzugten Ausführungsform werden die folgenden Anteile eingesetzt:

**Zusammensetzung A**

| **Rohstoff** | **Anteil in Gew.-Prozent** |
|---|---|
| Wasserglas | 40-60% |
| Wasser | 4-8% |
| KOH | 2-4% |
| Entschäumer | 0,02-0,08% |
| Füllstoff | 20-40% |
| Mikrohohlkugeln | 1-5% |
| Weitere Additive (Fasern, Kunststoff-Dispersion) | 1-4% |

Das Wasserglas ist auch in diesem Beispiel beispielsweise Natrium- oder Kaliumsilikat mit einem Feststoffgehalt von 25 bis 55 %, beispielsweise Natronwasserglas 37/40. Als Füllstoff werden bevorzugt anorganische Mineralien eingesetzt. Weitere Bestandteile können Glas- bzw. Mineralwollfasern mit einer mittleren Faserlänge von ca. 50 µm bis ca. 500 µm sein. Des Weiteren kann zur Verbesserung der Elastizität und der Wasserbeständigkeit eine Kunststoff-Dispersion zugesetzt werden.

**Zusammensetzung B**

| **Rohstoff** | **Anteil in Gew.-Prozent** |
|---|---|
| Lösemittel/Härter | 20-80% |
| Füllstoff | 15-40% |
| Verdicker | 4-10% |

Der Lösemittel und der Härter sind in diesem Beispiel dieselbe Verbindung, beispielsweise 1,3-Dioxolan-2-on oder 4-Methyl-1,3-Dioxolan-2-on. Gemischt wird Zusammensetzung A mit Zusammensetzung B in dieser bevorzugten Ausführungsform im Verhältnis 10:1.

Eine beispielhafte Rezeptur der Kombination mit einer Kunststoff-Dispersion als Bindemittel ist:

| **Zusammensetzung A [Gew. %]** | **Zusammensetzung B [Gew. %]** |
|---|---|
| 25-80 % Kunststoff-Dispersion | 5-50 % organische Carbonate |
| 2-20 % Kugeln mit Treibgas | 5-40 % Zement oder Branntkalk |
| 0-60 % Füllstoff (vorzugsweise anorganisch) | |

In einer besonderen Ausführungsform ist die Rezeptur:

| **Zusammensetzung A [Gew. %]** | **Zusammensetzung B [Gew. %]** |
|---|---|
| 60 % Kunststoff-Dispersion | 40 % 4-Methyl-1,3-dioxolan-2-on |
| 6,5 % Kugeln mit Treibgas | 60 % Portlandzement (CEM I) |
| 33,5 % Füllstoff (vorzugsweise anorganisch) | |

Die Zusammensetzungen können beispielsweise im Verhältnis A:B von 4:1 gemischt werden. Es entsteht ein elastischer Schaum mit einem Brennwert von ca. 20831 J/g.

Beispielhafte Rezepturen der Kombination mit Zement (z.B. Portandzement; CEM I) als Bindemittel sind:

| **Zusammensetzung A [Gew.-%]** | **Zusammensetzung B [Gew.-%]** |
|---|---|
| 20-40 % Zement | 10-30 % Wasser |
| 2-10 % Erstarrungsbeschleuniger (z.B. Sika Rapid 800) | 1-15 % 1,3-Dioxolan-2-on |
| 0,8-1,5 % Expancel 031DU40 | |

| **Zusammensetzung A [Gew.-%]** | **Zusammensetzung B [Gew.-%]** |
|---|---|
| 10-30 %Wasser | 20-40 % Zement |
| 0,8-1,5 %Expancel 031DU40 | 2-10 % Erstarrunqsbeschleuniqer |
| | 10-30 % 4-Methyl-1,3-dioxolan-2-on |
| | 0,5-5 % Anorganisches Verdickungsmittel (z.B. Schichtsilikate) |

In einer besonderen Ausführungsform ist die Rezeptur beispielsweise:

| **Zusammensetzung A [Gew.-%]** | **Zusammensetzung B [Gew.-%]** |
|---|---|
| 35 % Zement | 15 % Wasser |
| 3 % Erstarrungsbeschleuniger (z. B. Sika Rapid 800) | 5 % 1,3-Dioxolan-2-on |
| 1,2 % Expancel 031DU40 | |

Das Aufschäumverhältnis kann beispielsweise 1:4 betragen.

| **Zusammensetzung A [Gew.-%]** | **Zusammensetzung B [Gew.-%]** |
|---|---|
| 15 % Wasser | 35 % zement |
| 1 % Expancel 031DU40 | 3 % Erstarrungsbeschleuniger |
| | 20 % 4-Methyl-1,3-dioxolan-2-on |
| | 1 % Anorganisches Verdickungsmittel (z.B. Schichtsilikate) |

Das Aufschäumverhältnis kann beispielsweise 3,5:1 betragen.

Ein nach diesen Rezepturen hergestellter Zementschaum hat einen Brennwert von ca. 1600 J/g. Der Schaum fällt somit in die Baustoffklasse A1 (nicht brennbar).

Beispielhafte Rezepturen der Kombination mit Gips als Bindemittel sind:

| **Zusammensetzung A [Gew.-%]** | **Zusammensetzung B [Gew.-%]** |
|---|---|
| 20-40 % Gips (z.B. Rotband) | 10-30 % Wasser |
| 0,8-1,5 % Expancel 031DU40 | 1-15 % 1,3-Dioxolan-2-on |

| **Zusammensetzung** A **[Gew.-%]** | **Zusammensetzung** B **[Gew.-%]** |
|---|---|
| 10-30 % Wasser | 20-40 % Gips (z.B. Rotband) |
| 0,8-1,5 % Expancel 031DU40 | 10-30 % 4-Methyl-1,3-dioxolan-2-on |
| | 0,5-5 % Anorganisches Verdickungsmittel (z.B. Schichtsilikate) |

In einer besonderen Ausführungsform ist die Rezeptur beispielsweise:

| **Zusammensetzung A [Gew.-%]** | **Zusammensetzung B [Gew.-%]** |
|---|---|
| 20 % Gips (z.B. Rotband) | 12 % Wasser |
| 1 % Expancel 031DU40 | 7 % 1,3-Dioxolan-2-on |

Das Aufschäumverhältnis kann beispielsweise 1:4 betragen.

| **Zusammensetzung A [Gew.-%]** | **Zusammensetzung B [Gew.-%]** |
|---|---|
| 10 % Wasser | 20 % Gips (z.B. Rotband) |
| 1 % Expancel 031DU40 | 5 % 4-Methyl-1,3-dioxolan-2-on |
| | 1 % Anorganisches Verdickungsmittel (z.B. Schichtsilikate) |

Das Aufschäumverhältnis kann beispielsweise 4:1 betragen.

Ein nach diesen Rezepturen hergestellter Gipsschaum hat einen Brennwert von ca. 441 J/g. Der Schaum fällt somit in die Baustoffklasse A1 (nicht brennbar).

### Figurenbeschreibung

Figur 1: Schema der Messung der Biegefestigkeit
Figur 2: Biegefestigkeit faserverstärkter Leichtbauplatten
Figur 3: Biegefestigkeiten verschiedener Gewichtsprozente der MiWo_1
Figur 4: Biegefestigkeiten verschiedener Gewichtsprozente der Glasfaser_1
Figur 5: Abhängigkeit des Elastizitäts-Moduls vom Kunststoff-Anteil
Figur 6: Schematischer Aufbau der Wärmeleitung
Figur 7: Schaumfüllung in Wabenplatte
Figur 8: Tür mit Schaumfüllung (Brandschutztür)
Figur 9: Mineralschaum in Hohlraum zwischen einer Rohrdurchführung und einem Mauerwerk

### Ausführungsformen

### Ausführungsform 1

Kombination umfassend eine Zusammensetzung A und eine Zusammensetzung B, wobei die Zusammensetzung A ein anorganisches und/oder organisches Bindemittel und Mikrohohlkugeln und die Zusammensetzung B ein Lösemittel zum Öffnen dieser Mikrohohlkugeln enthält, wobei die Mikrohohlkugeln eine Polymerhülle aufweisen und ein Treibmittel enthalten.

### Ausführungsform 2

Die Kombination nach Ausführungsform 1, wobei das anorganische und/oder organische Bindemittel härtbar oder vernetzbar ist.

### Ausführungsform 3

Die Kombination nach Ausführungsform 1 oder 2, wobei die Zusammensetzung B einen Härter zum Härten oder Vernetzen des anorganischen und/oder organischen Bindemittels enthält.

### Ausführungsform 4

Die Kombination nach einem der vorhergehenden Ausführungsformen, wobei das anorganische und/oder organische Bindemittel ausgewählt ist aus der folgenden Gruppe: Polyolefine, Vinylpolymere, Styrol-Butadien-Copolymere, Polyacrylate, trocknende Öle, Naturharze, Alkydharze, Epoxidester, Polyester, Alkalisilikate, Phenolharze, Harnstoffharze, Melaminharze, Reaktionsharze oder Kombinationen davon; und bevorzugt ein Alkalisilikat ist, besonders bevorzugt Natriumsilikat oder Kaliumsilikat.

### Ausführungsform 5

Die Kombination nach einem der vorhergehenden Ausführungsformen, wobei die Polymerhülle ausgewählt ist aus der folgenden Gruppe: EVA (Ethylen-Vinylacetat Copolymer); Polyvinylidenchlorid und/oder Acrylnitril; Acrylnitril, Methylmethacrylat und/oder Methacrylnitril; oder Kombinationen davon; und bevorzugt Acrylnitril und/oder Methacrylnitril, ganz besonders bevorzugt Acrylnitril und Methacrylnitril umfasst.

### Ausführungsform 6

Die Kombination nach einem der vorhergehenden Ausführungsformen, wobei das Treibmittel ausgewählt ist aus der folgenden Gruppe: Flüssiggase umfassend kurzkettige Kohlenwasserstoffe ausgewählt aus Propan, Butan, Isobutan, Pentan, Isopentan oder Kombinationen davon; Dimethylether, Luft, CO₂, Stickstoff, FCKW oder Kombinationen davon.

### Ausführungsform 7

Die Kombination nach einem der vorhergehenden Ausführungsformen, wobei das Lösemittel ausgewählt ist aus der folgenden Gruppe: Aceton, Nitromethan, Dimethylsulfoxid, organische Carbonsäure-Ester R¹-O-C(=O)-O-R² mit R¹,R² = Alkyl-, Allyl- und/oder Arylresten; oder Kombinationen davon; bevorzugt ein Carbonsäure-Ester ist.

### Ausführungsform 8

Die Kombination nach einem der Ausführungsformen 3 bis 7, wobei das Lösemittel und der Härter dieselbe Verbindung sind.

### Ausführungsform 9

Die Kombination nach Ausführungsform 7 oder 8, wobei der Carbonsäure-Ester ausgewählt ist aus der folgenden Gruppe: Dimethoxyameisensäureanhydrid, 1,3-Dioxolan-2-on, 4-Methyl-1,3-Dioxolan-2-on, 4-Hydroxymethyl-1,3-Dioxolan-2-on oder Kombinationen davon; und bevorzugt 1,3-Dioxolan-2-on oder 4-Methyl-1,3-Dioxolan-2-on oder eine Kombination davon ist.

### Ausführungsform 10

Die Kombination nach einem der Ausführungsformen 3 bis 9, wobei das Lösemittel und der Härter dieselbe Verbindung sind, das Bindemittel Alkalisilikat ist, die Polymerhülle Acrylnitril und Methacrylnitril umfasst, das Treibmittel Isobutan ist und das Lösemittel 1,3-Dioxolan-2-on oder 4-Methyl-1,3-Dioxolan-2-on ist.

### Ausführungsform 11

Die Kombination nach einem der vorhergehenden Ausführungsformen umfassend die Zusammensetzung A und die Zusammensetzung B in einem Verhältnis A:B zwischen 100:1 und 100:30, bevorzugt 4-20:1, besonders bevorzugt 8-12:1, weiterhin besonders bevorzugt 10:1.

### Ausführungsform 12

Die Kombination nach einem der vorhergehenden Ausführungsformen, wobei die Zusammensetzung A zusätzlich mindestens einen der folgenden Bestandteile umfasst: mindestens einen Füllstoff, mindestens eine Faser, Wasser, eine Base, mindestens einen Entschäumer.

### Ausführungsform 13

Die Kombination nach Ausführungsform 12, wobei die mindestens eine Faser Mineralwolle oder Glasfaser oder eine Kombination davon ist.

### Ausführungsform 14

Die Kombination nach Ausführungsform 12 oder 13, wobei die mindestens eine Faser Mineralwolle oder Glasfaser ist, eine mittlere Länge von ≤ 0,25 mm hat und zu einem Anteil von 0,5-4 Gew.-% in der Kombination enthalten ist.

### Ausführungsform 15

Die Kombination nach einem der vorhergehenden Ausführungsformen umfassend eine Zusammensetzung A enthaltend Natrium- oder Kaliumsilikat, Wasser, KOH oder NaOH, einen Entschäumer, einen oder mehrere Füllstoffe, Mikrohohlkugeln und eine Faser und eine Zusammensetzung B enthaltend 1,3-Dioxolan-2-on oder 4-Methyl-1,3-Dioxolan-2-on, einen Füllstoff und ein Verdickungsmittel.

### Ausführungsform 16

Verfahren zur Herstellung einer Schaummasse oder eines Bauschaums, insbesondere eines Ortschaums, umfassend Zusammenbringen der Zusammensetzung A mit der Zusammensetzung B wie nach den Ausführungsformen 1 bis 15 definiert.

### Ausführungsform 17

Verfahren zum Öffnen von Mikrohohlkugeln wie in einem der Ausführungsformen 1, 5 und 6 definiert, dadurch gekennzeichnet, dass die Mikrohohlkugeln mit einem Lösemittel nach einem der Ausführungsformen 7 bis 9 zusammengebracht werden.

### Ausführungsform 18

Verfahren nach Ausführungsform 17, dadurch gekennzeichnet, dass das Verfahren bei einer Temperatur von unter 50°C, insbesondere bei Raumtemperatur, durchführbar ist.

### Ausführungsform 19

Schaummasse hergestellt nach dem Verfahren nach Ausführungsform 16.

### Ausführungsform 20

Bauschaum, insbesondere Ortschaum, hergestellt nach dem Verfahren nach Ausführungsform 16.

### Ausführungsform 21

Produkt, bevorzugt eine Leichtbauplatte oder ein Formteil, hergestellt nach dem Verfahren nach Ausführungsform 16 und Gießen in eine Form vor dem Verschäumen, Verschließen der Form, Enttopfen und Trocknen.

### Ausführungsform 22

Das Produkt nach Ausführungsform 21 mit einer durchschnittlichen Porengröße zwischen 0,05 und 5 mm, bevorzugt zwischen 0,1 und 2 mm.

### Ausführungsform 23

Brandschutzmittel hergestellt unter Verwendung der Schaummasse nach Ausführungsform 19.

### Ausführungsform 24

Verwendung eines Bauschaums, insbesondere eines Ortschaums, nach Ausführungsform 20 als Füll-, Konstruktions-, Isolations-, Brandschutz- oder Dämmschaum, besonders bevorzugt zur Herstellung von Leichtbauplatten oder Formteilen.

### Weitere Ausführungsformen

### Ausführungsform 1a

Kombination umfassend eine Zusammensetzung A und eine Zusammensetzung B, wobei die Zusammensetzung A Mikrohohlkugeln und die Zusammensetzung B ein Lösemittel zum Öffnen dieser Mikrohohlkugeln enthält und die Zusammensetzung A und/oder die Zusammensetzung B ein anorganisches und/oder organisches Bindemittel enthält, wobei die Mikrohohlkugeln eine Polymerhülle aufweisen und ein Treibmittel enthalten.

### Ausführungsform 2a

Kombination nach Ausführungsform 1a umfassend eine Zusammensetzung A und eine Zusammensetzung B, wobei die Zusammensetzung A ein anorganisches und/oder organisches Bindemittel und Mikrohohlkugeln und die Zusammensetzung B ein Lösemittel zum Öffnen dieser Mikrohohlkugeln enthält, wobei die Mikrohohlkugeln eine Polymerhülle aufweisen und ein Treibmittel enthalten.

### Ausführungsform 3a

Die Kombination nach Ausführungsform 1a oder 2a, wobei die Zusammensetzung B einen Härter zum Härten oder Vernetzen des anorganischen und/oder organischen Bindemittels enthält.

### Ausführungsform 4a

Die Kombination nach einer der vorhergehenden Ausführungsformen, wobei das anorganische und/oder organische Bindemittel ausgewählt ist aus der folgenden Gruppe: Polyolefine, Vinylpolymere, Styrol-Butadien-Copolymere (bevorzugt Styrol-Butadien-Acrylat), Polyacrylate, trocknende Öle, Naturharze, Alkydharze, Epoxidester, Polyester, Alkalisilikate, Phenolharze, Harnstoffharze, Melaminharze, Reaktionsharze, SBR- Latices, Naturlatex, Neoprenlatex, Acrylharze oder Kombinationen davon; und bevorzugt ein Alkalisilikat ist, besonders bevorzugt Natriumsilikat oder Kaliumsilikat.

### Ausführungsform 5a

Die Kombination nach einer der vorhergehenden Ausführungsformen, wobei das anorganische und/oder organische Bindemittel ein Kunststoff ist und als Dispersion vorliegt.

### Ausführungsform 6a

Die Kombination nach einer der vorhergehenden Ausführungsformen, wobei die Polymerhülle ausgewählt ist aus der folgenden Gruppe: EVA (Ethylen-Vinylacetat Copolymer); Polyvinylidenchlorid und/oder Acrylnitril; Acrylnitril, Methylmethacrylat und/oder Methacrylnitril; oder Kombinationen davon; und bevorzugt Acrylnitril und/oder Methacrylnitril, ganz besonders bevorzugt Acrylnitril und Methacrylnitril umfasst.

### Ausführungsform 7a

Die Kombination nach einer der vorhergehenden Ausführungsformen, wobei das Treibmittel ausgewählt ist aus der folgenden Gruppe: Flüssiggase umfassend kurzkettige Kohlenwasserstoffe ausgewählt aus Propan, Butan, Isobutan, Pentan, Isopentan oder Kombinationen davon; Dimethylether, Luft, CO₂, Stickstoff, FCKW oder Kombinationen davon.

### Ausführungsform 8a

Die Kombination nach einer der vorhergehenden Ausführungsformen, wobei das Lösemittel ausgewählt ist aus der folgenden Gruppe: Aceton, Nitromethan, Dimethylsulfoxid, organische Carbonsäure-Ester R¹-O-C(=O)-O-R² mit R¹,R² = Alkyl-, Allyl- und/oder Arylresten; oder Kombinationen davon; bevorzugt ein Carbonsäure-Ester ist.

### Ausführungsform 9a

Die Kombination nach einer der Ausführungsformen 3a bis 8a, wobei das Lösemittel und der Härter dieselbe Verbindung sind.

### Ausführungsform 10a

Die Kombination nach Ausführungsform 8a oder 9a, wobei der Carbonsäure-Ester ausgewählt ist aus der folgenden Gruppe: Dimethoxyameisensäureanhydrid, 1,3-Dioxolan-2-on, 4-Methyl-1,3-Dioxolan-2-on, 4-Hydroxymethyl-1,3-Dioxolan-2-on oder Kombinationen davon; und bevorzugt 1,3-Dioxolan-2-on oder4-Methyl-1,3-Dioxolan-2-on oder eine Kombination davon ist.

### Ausführungsform 11a

Verfahren zur Herstellung einer Schaummasse oder eines Bauschaums, insbesondere eines Ortschaums, umfassend Zusammenbringen der Zusammensetzung A mit der Zusammensetzung B wie nach den Ausführungsformen 1a bis 10a definiert.

### Ausführungsform 12a

Verfahren zum Öffnen von Mikrohohlkugeln wie in einer der Ausführungsformen 1a, 2a, 6a und 7a definiert, dadurch gekennzeichnet, dass die Mikrohohlkugeln mit einem Lösemittel nach einem der Ansprüche 8a bis 10a zusammengebracht werden.

### Ausführungsform 13a

Verfahren nach Ausführungsform 12a, dadurch gekennzeichnet, dass das Verfahren bei einer Temperatur von unter 50°C, insbesondere bei Raumtemperatur, durchführbar ist.

### Ausführungsform 14a

Schaummasse hergestellt nach dem Verfahren nach Ausführungsform 11a.

### Ausführungsform 15a

Bauschaum, insbesondere Ortschaum, hergestellt nach dem Verfahren nach Ausführungsform 11a.

### Ausführungsform 16a

Produkt, bevorzugt eine Leichtbauplatte oder ein Formteil, hergestellt nach dem Verfahren nach Ausführungsform 11a und Gießen in eine Form vor dem Verschäumen, Verschließen der Form, Enttopfen und Trocknen.

### Ausführungsform 17a

Verwendung eines Bauschaums, insbesondere eines Ortschaums, nach Ausführungsform 15a als Füll-, Konstruktions-, Isolations-, Brandschutz- oder Dämmschaum, besonders bevorzugt zur Herstellung von Leichtbauplatten oder Formteilen.

### Ausführungsform 18a

Verwendung eines Bauschaums, insbesondere eines Ortschaums, nach Ausführungsform 15a zum Ausschäumen der Hohlräume einer Wabenplatte.

## Patentansprüche

1. Schaummasse, umfassend
- Alkalisilikat, bevorzugt gehärtetes Alkalisilikat,
- geöffnete, bevorzugt an- oder aufgelöste, Mikrohohlkugeln mit Polymerhülle.

2. Schaummasse, umfassend
- Alkalisilikat, bevorzugt gehärtetes Alkalisilikat,
- geöffnete, bevorzugt an- oder aufgelöste, Mikrohohlkugeln mit Polymerhülle,
- Alkohol.

3. Schaummasse gemäß einem der vorherigen Ansprüche, **dadurch gekennzeichnet, dass** das Polymer der Polymerhülle geeignet ist, in polaren Lösungsmitteln mit hohem Dipolmoment an- oder aufgelöst zu werden.

4. Schaummasse gemäß einem der vorherigen Ansprüche, **dadurch gekennzeichnet, dass** das Polymer der Polymerhülle geeignet ist, in dem zum Aushärten des Wasserglases verwendeten Härter an- oder aufgelöst zu werden.

5. Schaummasse gemäß einem der vorherigen Ansprüche, **dadurch gekennzeichnet, dass** das Polymer der Polymerhülle geeignet ist, in Carbonsäure-Estern, bevorzugt in Carbonsäure-Estern der Formel R¹-O-C(=O)-O-R² mit R¹,R² = Alkyl-, Allyl- und/oder Arylresten, oder Kombinationen daraus, an- oder aufgelöst zu werden.

6. Schaummasse gemäß einem der vorherigen Ansprüche, **dadurch gekennzeichnet, dass** das Polymer der Polymerhülle geeignet ist, in Dimethoxyameisensäureanhydrid, 1,3-Dioxolan-2-on, 4-Methyl-1,3-Dioxolan-2-on, 4-Hydroxymethyl-1,3-Dioxolan-2-on oder Kombinationen davon; und ist bevorzugt 1,3-Dioxolan-2-on oder 4-Methyl-1,3-Dioxolan-2-on oder einer Kombination davon, bevorzugt 3-Dioxolan-2-on und/oder 4-Methyl-1,3-dioxolan-2-on, besonders bevorzugt Methyl-1,3-dioxolan-2-on, an- oder aufgelöst zu werden.

7. Schaummasse, bevorzugt nach einem der vorherigen Ansprüche, erhältlich aus einem Verfahren umfassend Zusammenbringen einer Zusammensetzung A mit einer Zusammensetzung B, **dadurch gekennzeichnet, dass** die Zusammensetzung A Mikrohohlkugeln und die Zusammensetzung B ein Lösemittel zum Öffnen dieser Mikrohohlkugeln enthält und die Zusammensetzung A und/oder die Zusammensetzung B Alkalisilikat als anorganisches Bindemittel enthält, wobei die Mikrohohlkugeln eine Polymerhülle aufweisen und ein Treibmittel enthalten und das Lösemittel geeignet ist die Polymerhülle der Mikrohohlkugeln an- oder aufzulösen.

8. Schaummasse nach Anspruch 6, **dadurch gekennzeichnet, dass** die die Zusammensetzung A Alkalisilikat als anorganisches Bindemittel enthält und die Zusammensetzung B einen Härter zum Härten oder Vernetzen des anorganischen Bindemittels enthält.

9. Schaummasse nach einem der Ansprüche 6 oder 7, **dadurch gekennzeichnet, dass** das Lösemittel ausgewählt ist aus der folgenden Gruppe: Aceton, Nitromethan, Dimethylsulfoxid, organische Carbonsäure-Ester R¹-O-C(=O)-O-R² mit R¹,R² = Alkyl-, Allyl- und/oder Arylresten; oder Kombinationen davon; bevorzugt ein Carbonsäure-Ester ist.

10. Schaummasse nach einem der Ansprüche 6 bis 8, **dadurch gekennzeichnet, dass** das Lösemittel und der Härter dieselbe Verbindung sind.

11. Schaummasse nach einem der Ansprüche 8 oder 9, **dadurch gekennzeichnet, dass** der Carbonsäure-Ester ausgewählt ist aus der folgenden Gruppe: Dimethoxyameisensäureanhydrid, 1,3-Dioxolan-2-on, 4-Methyl-1,3-Dioxolan-2-on, 4-Hydroxymethyl-1,3-Dioxolan-2-on oder Kombinationen davon; und bevorzugt 1,3-Dioxolan-2-on oder 4-Methyl-1,3-Dioxolan-2-on oder eine Kombination davon ist.

12. Schaummasse nach einem der vorherigen Ansprüche, **dadurch gekennzeichnet, dass** das Alkalisilikat ausgewählt ist aus der Gruppe bestehend aus Natriumsilikat oder Kaliumsilikat.

13. Schaummasse nach einem der vorherigen Ansprüche, **dadurch gekennzeichnet, dass** die Polymerhülle ausgewählt ist aus der folgenden Gruppe: EVA (Ethylen-Vinylacetat Copolymer); Polyvinylidenchlorid und/oder Acrylnitril; Acrylnitril, Methylmethacrylat und/oder Methacrylnitril; oder Kombinationen davon; und bevorzugt Acrylnitril und/oder Methacrylnitril, ganz besonders bevorzugt Acrylnitril und Methacrylnitril umfasst.

14. Schaummasse nach einem der vorhergehenden Ansprüche, **dadurch gekennzeichnet, dass** die Schaummasse ein Bauschaum, insbesondere als Ortschaum, ist.

15. Verwendung einer Schaummasse nach einem der vorherigen Ansprüche oder eines Bauschaums, insbesondere eines Ortschaums, nach Anspruch 13 als Brandschutzschaum im, bevorzugt vorbeugenden, Brandschutz als Füll-, Konstruktions-, Isolations-, Brandschutz- oder Dämmschaum, besonders bevorzugt zur Herstellung von Leichtbauplatten oder Formteilen oder zum Ausschäumen der Hohlräume einer Wabenplatte.

16. Produkt, bevorzugt eine Leichtbauplatte oder ein Formteil, aus einer Schaummasse gemäß einem der Ansprüche 1 bis 12, bevorzugt dadurch erhältlich, dass die Schaummasse nach einem der Ansprüche 1 bis 12 in einer Form verschäumt wird.
